# EUROPEAN PATENT SPECIFICATION

(11) **EP 2 484 553 B1**
(45) Date of publication and mention of the grant of the patent: **04.07.2018**
(21) Application number: 12154292.2
(22) Date of filing: 07.02.2012
(51) Int. Cl.: B60Q 1/00, B60Q 1/18, F21V 7/00, F21S 41/147, F21S 41/32

(54) **Vehicle lamp and optical unit thereof**
Fahrzeuglampe und optische Einheit dafür
Phare de véhicule et son unité optique

(30) Priority: 07.02.2011 JP 2011023861
(43) Date of publication of application: 08.08.2012
(73) Proprietor: Koito Manufacturing Co., Ltd., Tokyo 108-8711 (JP)
(72) Inventor: Matsumoto, Akinori, Shizuoka-shi, Shizuoka (JP)
(74) Representative: Intès, Didier Gérard André

(56) References cited:
- EP-A1- 1 970 617
- EP-A2- 1 276 157
- EP-A2- 1 338 468
- EP-A2- 1 388 707
- EP-A2- 2 028 411
- DE-A1-102008 034 376
- US-A1- 2008 247 170
- US-A1- 2009 296 383

## Description

The present invention relates to a vehicle lamp and an optical unit thereof.

The documents EP 1970 617 A1 and EP 1 338 468 A2 disclose lighting modules for vehicle headlamps. JP2008-226706A and JP2008-226707A disclose paraboloidal reflector type vehicle lamps including a light emitting device and a paraboloidal reflector configured to forwardly reflect light from the light emitting device. These vehicle lamps are configured to form a low-beam light distribution pattern.

Generally, a vehicle headlamp can form a low-beam light distribution pattern and a high-beam light distribution pattern. To improve driver's field of view during a low beam mode, an additional light distribution pattern may be formed in addition to the low-beam light distribution pattern. The additional light distribution pattern is formed by, for example, an auxiliary lamp unit provided in the vehicle headlamp in addition to one or more lamp units that forms the low-beam light distribution pattern and the high-beam light distribution pattern.

The additional light distribution pattern is, for example, a diffused light distribution pattern formed below the horizontal line and having a larger lateral diffusion angle than the low-beam light distribution pattern. A lamp unit for forming such a diffused light distribution pattern has, for example, a light emitting device having a rectangular light emitting surface, and a paraboloidal reflector, wherein the light emitting device is disposed at a laterally center position with respect to the reflector such that the long sides of the light emitting surface extend in the horizontal direction. To form the diffused light distribution pattern, the reflector reflects light from the light emitting device such that the long sides of the rectangular light source images of the light emitting surface extend in the horizontal direction and such that the laterally long light source images are laterally and vertically distributed. That is, the reflector is configured to diffuse the light from the light emitting device in vertical and lateral directions. Accordingly, the reflector is wide in both vertical and lateral directions.

Therefore, a vehicle lamp including a lamp unit for forming the additional light distribution pattern in addition to one or more lamp units for forming the low-beam light distribution pattern and the high-beam light distribution pattern tends to increase in size.

It is an object of the present invention to provide a vehicle lamp and an optical unit thereof that are smaller in size and capable of forming a horizontally diffused light distribution pattern.

According to a first aspect of the present invention, a vehicle lamp includes a light emitting device having a rectangular light emitting surface and disposed such that the long sides of the light emitting surface extend in a vertical direction, and a reflector configured to reflect light from the light emitting device in a forward direction of the vehicle lamp to form a horizontally diffused light distribution pattern. The reflector is configured to reflect the light from the light emitting device such that the long sides of the light emitting surface are projected to extend in a vertical direction of the horizontally diffused light distribution pattern, and such that, in a top view of the vehicle lamp, a part of the light reflected by one end portion of the reflector and another part of the light reflected by another end portion of the reflector intersect each other.

According to another aspect of the present invention, an optical unit of the vehicle lamp includes the reflector and a light source mounting portion to which the light emitting device is fixed.

In some embodiments, the optical unit may be suitable for being incorporated into a vehicle lamp according to the aforesaid first aspect of the present invention.

In some embodiments, the optical unit may include a reflector, and a light source mounting portion suitable for fixing a light emitting device having a rectangular light emitting surface to said light source mounting portion; and the optical unit may be configured such that, when the light emitting device is fixed to the light source mounting portion:
the long sides of the light emitting surface can extend in an extension direction (e.g. in a vertical direction, when the optical unit is incorporated into the vehicle lamp),
the reflector can reflect light from the light emitting device in a forward direction from the optical unit (e.g. in a forward direction of the vehicle lamp, when the optical unit is incorporated into the vehicle lamp) to form a diffused light distribution pattern that is diffused along a diffusion direction substantially perpendicular to the extension direction (e.g. to form a horizontally diffused light distribution pattern, when the optical unit is incorporated into the vehicle lamp), and
the reflector can reflect the light from the light emitting device such that the long sides of the light emitting surface are projected to extend in a direction substantially parallel to the extension direction (e.g. in a vertical direction of the horizontally diffused light distribution pattern, when the optical unit is incorporated into the vehicle lamp), and such that, in a plane perpendicular to the long sides of the light emitting surface (e.g. in a top view of the vehicle lamp, when the optical unit is incorporated into the vehicle lamp), a part of the light reflected by one end portion of the reflector and another part of the light reflected by another end portion of the reflector intersect each other.

Other aspects and advantages of the invention will be apparent from the following description, the drawings and the claims.
Fig. 1 is a horizontal sectional view of a vehicle lamp according to an exemplary embodiment of the present invention.
Fig. 2A is a top view of a lamp unit for forming a diffused light distribution pattern.
Fig. 2B is a front view of the lamp unit.
Fig. 2C is a view of a portion of the lamp unit near a light emitting device of the lamp unit, viewed from the direction A in Fig. 2A.
Fig. 3 is a horizontal sectional view of a portion of the vehicle lamp near the lamp unit for forming the diffused light distribution pattern.
Fig. 4A is a diagram illustrating iso-illuminance curves of the diffused light distribution pattern formed on a virtual vertical screen in front of the lamp by a left headlamp.
Fig. 4B is a diagram illustrating iso-illuminance curves of a light distribution pattern formed on the virtual vertical screen by combining a low-beam light distribution pattern and the diffused light distribution pattern formed by the left headlamp.
Fig. 5A is a diagram illustrating iso-illuminance curves of a light distribution pattern formed on a road surface by combining the diffused light distribution patterns formed by the left and right headlamps.
Fig. 5B is a diagram illustrating iso-illuminance curves of a low-beam light distribution pattern formed on the road surface.
Fig. 5C is a diagram illustrating iso-illuminance curves of a light distribution pattern formed on the road surface by combining the low-beam light distribution pattern and the diffused light distribution patterns.
Fig. 6 is a horizontal sectional view of a lamp unit configured to form a diffused light distribution pattern and an additional light distribution pattern.
Fig. 7 is a diagram illustrating the diffused light distribution pattern and the additional light distribution pattern formed on a virtual vertical screen in front of the lamp by a left headlamp.

Hereinafter, exemplary embodiments of the present invention will be described in detail with reference to the drawings. However, the following exemplary embodiments do not limit the scope of the claimed invention, and it will be understood by those skilled in the art that not all the elements described below are necessary to implement the present invention.

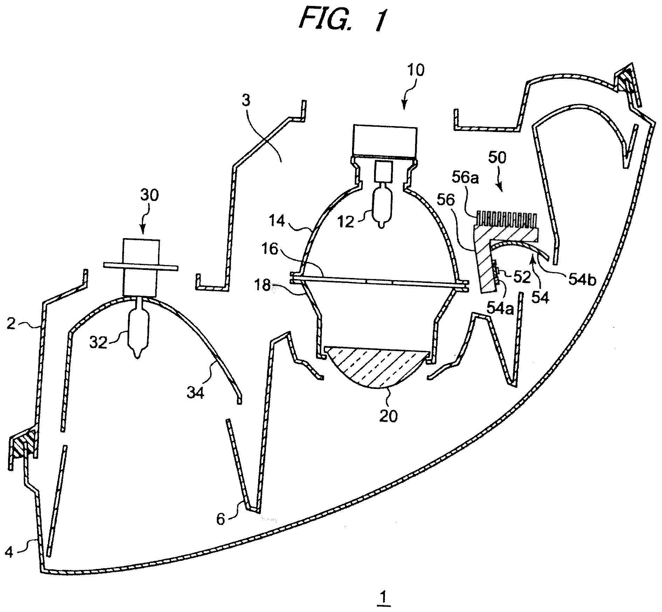

A vehicle lamp 1 according to an exemplary embodiment of the present invention is a vehicle headlamp, which is provided in a pair on each side of a front portion of a vehicle. The right and left headlamps have substantially the same configuration, except that they are bilaterally symmetrical. Fig. 1 illustrates the left headlamp as an example of the vehicle lamp 1.

As shown in Fig. 1, the vehicle lamp 1 includes a lamp body 2 having a front opening, and a transparent cover 4 attached to the lamp body 2 to cover the front opening of the lamp body 2. The transparent cover 4 is made of a transparent resin, glass or the like. A lamp unit 10, a lamp unit 30 and a lamp unit 50 are accommodated in a lamp chamber 3 formed by the lamp body 2 and the transparent cover 4. The lamp unit 10, the lamp unit 30 and the lamp unit 50 are attached to the lamp body 2 and supported in the lamp chamber 3 via support members. Because the structures for attaching the lamp units 10, 30. 50 to the lamp body 2 are known, detailed description thereof will be omitted.

Inside the lamp chamber 3, an extension member 6 is also provided. The extension member 6 has openings in the regions where the lamp units 10, 30, 50 are arranged. The extension member 6 is fixed to the lamp body 2. In a front view of the lamp 1, the extension member 6 covers a region between the lamp body 2 and the lamp units 10, 30, 50.

The lamp unit 10 is configured to form a low-beam light distribution pattern. The lamp unit 10 is a projector type lamp unit, and includes a light source bulb 12, a reflector 14, a shade 16, a lens holder 18 and a projector lens 20.

An incandescent lamp or a discharge lamp may be used as the light source bulb 12. A light emitting device, such as an LED, may be used alternatively as a light source. The reflector 14 is formed like a cup, and has an insertion hole at the center. The light source bulb 12 is inserted into the insertion hole of the reflector 14, and is fixed to the reflector 14. The reflector 14 has an ellipsoidal reflecting surface. The light source bulb 12 is disposed at or near the first focal point of the reflecting surface. The projector lens 20 is arranged such that the rear focal point of the projector lens 20 is disposed at or near the second focal point of the reflecting surface.

The shade 16 is like a flat plate, and is provided such that an upper end portion of the shade 16 is located near the second focal point of the reflector 14 or near the rear focal point of the projector lens 20. The upper end portion of the shade 16 has a shape that corresponds to a cutoff line of the low-beam light distribution pattern. Direct light from the light source bulb 12 and light reflected by the reflector 14 are partially blocked by the shade 16. The projector lens 20 is a planoconvex aspherical lens having a convex front surface and a flat rear surface. The projector lens 20 projects a light source image formed on a rear focal plane, which includes the rear focal point of the projector lens 20, as an inverted image on a virtual vertical screen in front of the lamp. The projector lens 20 is fixed to a front end portion of the lens holder 18. A rear end portion of the lens holder 18 is fixed to a front end portion of the reflector 14.

Light from the light source bulb 12 is guided to the projector lens 20 above the shade 16, either directly from the light course bulb or after being reflected by the reflector 14. A part of the light traveling toward the projector lens 20 is blocked by the shade 16 to form the low-beam light distribution pattern. Because the low-beam light distribution pattern is known, detailed description thereof will be omitted. The lamp unit 10 may be a paraboloidal reflector type lamp unit, or other types of lamp unit.

The lamp unit 30 is configured to form a high-beam light distribution pattern. The lamp unit 30 is a paraboloidal reflector type lamp unit, and includes a light source bulb 32 and a reflector 34. The light source bulb 32 has a similar configuration to that of the light source bulb 12. A reflecting surface of the reflector 34 has a portion of a paraboloid of revolution, having a focal point at or near the light source bulb 32, as a reference. Light from the light source bulb 32 is forwardly irradiated from the lamp unit 30, either directly from the light source bulb 32 or after being reflected by the reflector 34 to form the high-beam light distribution pattern. Because the high-beam light distribution pattern is known, detailed description thereof will be omitted. The lamp unit 30 may be a projector type lamp unit.

The lamp unit 50 is configured to form a diffused light distribution pattern. The diffused light distribution pattern is diffused in the horizontal direction. The lamp unit 50 is a paraboloidal reflector type lamp unit, and includes a light source module 52 and an optical unit 54. The optical unit 54 has an light source mounting portion 54a and a reflector 54b. The light source module 52 is fixed to the light source mounting portion 54a of the optical unit 54. The light source mounting portion 54a and the reflector 54b are attached to a heat sink 56. The heat sink 56 has a plurality of heat dissipating fins 56a. The heat sink 56 is attached to the lamp body 2 by an aiming screw and/or a leveling shaft.

Light from a light emitting device of the light source module 52 is reflected by the reflector 54b in a forward direction from the lamp unit 50. Thus, a light source image of a light emitting surface of the light emitting device is projected in the forward direction from the vehicle to form the diffused light distribution pattern.

The lamp unit 50 will be described in detail below.

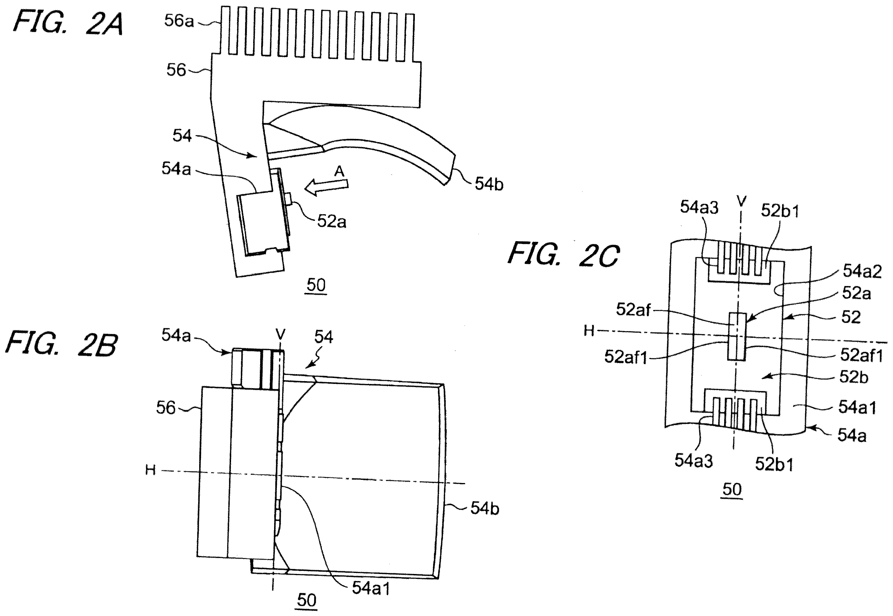

As shown in Figs. 2A to 3, the light source module 52 has a light emitting device 52a and a substrate 52b supporting the light emitting device 52a. The light emitting device 52a is, for example, a light emitting diode (LED). The light emitting device 52a has a rectangular light emitting surface 52af. The substrate 52b is, for example, a thermally conductive and electrically insulating substrate made of ceramic or the like. Electrodes 52b1 are formed on the substrate 52b to supply power to the light emitting device 52a.

The light source mounting portion 54a has a plate-like base portion 54a1 and power feeding terminals 54a3. The base portion 54a1 has an opening 54a2. Each of the power feeding terminal 54a3 has one end fixed to the base portion 54a1 and the other end extending into the opening 54a2. The light source module 52 is fitted into the opening 54a2, and is fixed to the base portion 54a1. The light source module 52 is fixed to the base portion 54a1 such that the power feeding terminals 54a3 are connected to the electrodes 52b1 of the light source module 52. The light emitting device 52a is arranged such that the long sides 52af1 of the light emitting surface 52af extend in the vertical direction.

The reflector 54b is configured to reflect light from the light emitting device 52a in the forward direction from the lamp. A reflecting surface of the reflector 54b may have a portion of a paraboloid of revolution having a focal point on or near the light emitting device 52a, as a reference. The reflector 54b is configured to reflect the light from the light emitting device 52a such that the long sides 52af1 of the light emitting surface 52af are projected to extend in the vertical direction of the diffused light distribution pattern. That is, the reflector 54b reflects the light from the light emitting device 52a and projects a light source image of the light emitting surface 52af in the forward direction from the vehicle such that the long sides of the projected light source image, which is rectangular, are made substantially parallel to the vertical line V.

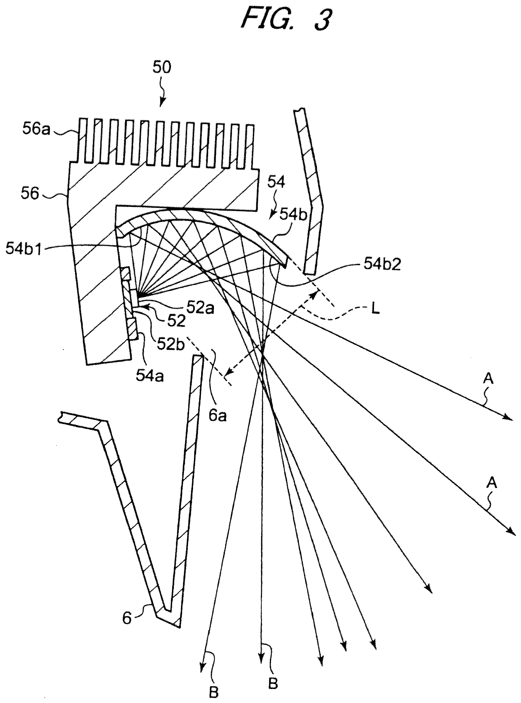

The light source mounting portion 54a is disposed near one end portion 54b1 of the reflector 54b. Accordingly, the light emitting device 52a is disposed near the one end portion 54b1. The light emitting device 52a is fixed to the light source mounting portion 54a such that the light emitting surface 52af faces outward in the vehicle width direction. In the top view of the vehicle lamp 1, light reflected by the one end portion 54b1 of the reflector 54b and light reflected by the other end portion 54b2 of the reflector 54b intersect each other. More specifically, as shown in Fig. 3, light rays A reflected by the one end portion 54b1 and light rays B reflected by the other end portion 54b2 intersects each other.

The lamp unit 50 is arranged such that the one end portion 54b1 of the reflector 54b is the inner side portion of the reflector 54b in the vehicle width direction and the other end portion 54b2 is the outer side portion of the reflector 54b in the vehicle width direction. Accordingly, the light reflected by the one end portion 54b1 travels more toward the outer side in the vehicle width direction than the light reflected by the other end portion 54b2. The light reflected by the one end portion 54b1 travels toward the outer side in the vehicle width direction in front of the vehicle so as to form a portion of a diffused light distribution pattern P1 on the outer side in the vehicle width direction. On the other hand, the light reflected by the other end portion 54b2 travels toward the central side in the vehicle width direction in front of the vehicle so as to form a portion of the diffused light distribution pattern P1 on the central side in the vehicle width direction.

The reflector 54b is configured such that light is reflected more toward the outer side in the vehicle width direction as the light is reflected at a position closer to the one end portion 54b1. That is, the direction in which the light from the light emitting device 52a is reflected by the reflector 54b varies continuously from the outer side to the inner side in the vehicle width direction as the reflection position is shifted from the one end portion 54b1 to the other end portion 54b2.

In this manner, in the top view of the lamp unit 50, i.e. when viewed from a direction parallel to the long sides 52af1 of the light emitting surface 52af, or in other words, in a plane perpendicular to the long sides 52af1, the light reflected by the one end portion 54b1 of the reflector 54b and the light reflected by the other end portion 54b2 intersect each other and are irradiated in the forward direction of the lamp. The width of the path the light traveling forward from the reflector 54b decreases toward a region where the light reflected by the one end portion 54b1 and the light reflected by the other end portion 54b2 intersect each other, and then increases as it goes further forward after the intersection.

Here, according to a conventional lamp unit for forming a diffused light distribution pattern, a light emitting device is disposed at the laterally center position with respect to a reflector. The reflector is configured such that, in the top view, a portion of the reflecting surface located on the inner side in the vehicle width direction reflects the light from the light emitting device toward the inner side in the vehicle width direction, and a portion of reflecting surface located on the outer side in the vehicle width direction reflects the light from the light emitting device toward the outer side in the vehicle width direction. Accordingly, the opening of the extension member 6 for the lamp unit for forming a diffused light distribution pattern is required to be larger than the reflector in the font view.

In contrast, according to the exemplary embodiment described above, the opening 6a of the extension member 6 that corresponds to the lamp unit 50 is disposed near the region where the light reflected by the one end portion 54b1 and the light reflected by the other end portion 54b2 intersect each other, so that the size of the opening 6a (i.e., the width L of the opening 6a) can be reduced as compared with the conventional structure. Thus, increase in the size of the vehicle lamp 1 due to addition of the lamp unit 50 for forming a diffused light distribution pattern can be suppressed, as compared with the conventional structure.

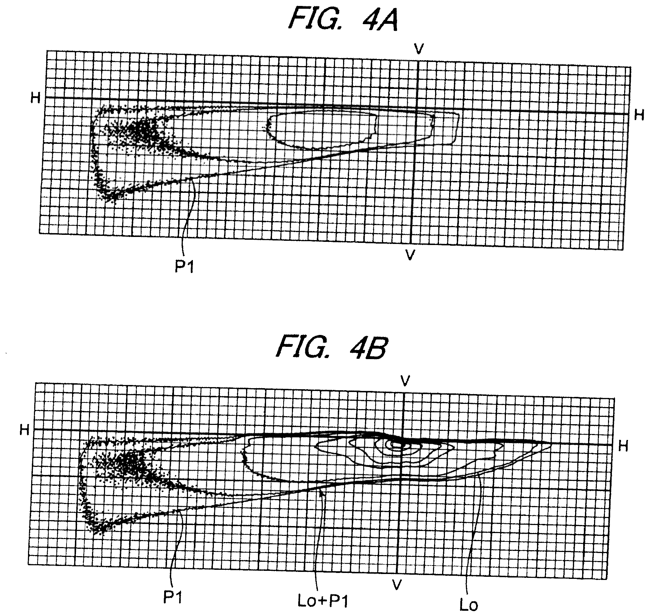

Next, a diffused light distribution pattern formed by the lamp unit 50 will be described. Figs. 4A and 4B illustrate light distribution patterns formed on a virtual vertical screen disposed in front of the lamp, i.e., at a position 10 m ahead the lamp.

As shown in Fig. 4A, a diffused light distribution pattern P1 formed by the lamp unit 50 of the left headlamp horizontally extends below the horizontal line H. One lateral side of the diffused light distribution pattern P1 is near the vertical line V, i.e., near the center in the vehicle width direction. As shown in Fig. 4A and Fig. 4B, moreover, the diffused light distribution pattern P1 extends more laterally outward than a low-beam light distribution pattern Lo toward the other lateral side of the diffused light distribution pattern P1. Further, the vertical width of the diffused light distribution pattern P1 is larger on the other lateral side than on the one lateral side. More specifically, from the one lateral side to the other lateral side, the vertical width of the diffused light distribution pattern P1 becomes gradually wider in a downward direction. A diffused light distribution pattern P2 formed by the right headlamp has a shape bilaterally symmetrical to the diffused light distribution pattern P1 formed by the left headlamp. Hereinafter, the diffused light distribution pattern P1 and the diffused light distribution pattern P2 will be collectively referred to as a diffused light distribution pattern P.

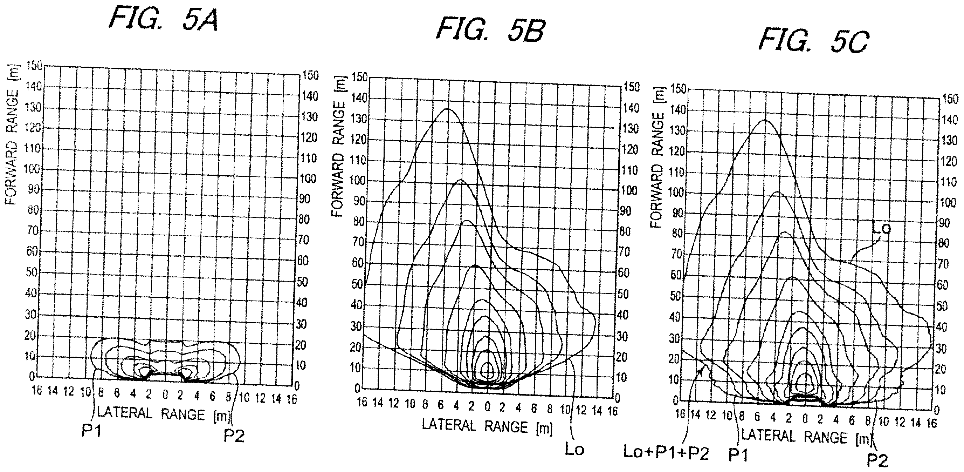

As shown in Fig. 5A and Fig. 5B, moreover, the diffused light distribution pattern P1 and the diffused light distribution pattern P2 extend more laterally outward than the low-beam light distribution pattern Lo in the vehicle width direction in a region right in front of the vehicle. Accordingly, as shown in Fig. 5C, when the diffused light distribution patterns P1 and P2 are formed additionally to the low-beam light distribution pattern Lo, driver's field of view in a horizontally outer area near the vehicle can be improved as compared with that in the case where only the low-beam light distribution pattern Lo is formed.

Here, in a conventional lamp unit for forming a diffused light distribution pattern, a light emitting device is disposed in the horizontally central portion of a reflector such that long sides of a light emitting surface extend in parallel to a horizontal line H, so that light from the light emitting device is reflected such that the long sides extend in the horizontal direction of the diffused light distribution pattern. In addition, the light from the light emitting device is diffused vertically and horizontally so that the laterally long light source images of the light emitting surface are laterally and vertically distributed to thereby form the diffused light distribution pattern. In contrast, according to the lamp unit 50, the light emitting device 52a is disposed such that the long sides 52af1 of the light emitting surface 52af are parallel to the vertical line V, and the light of the light emitting device 52a is reflected such that the long sides 52afl are projected to extend in the vertical direction of the diffused light distribution pattern P. That is, in the lamp unit 50, the vertical direction in the diffused light distribution pattern P in which the vertical length is shorter than the horizontal length is associated with the long sides 52af1 of the light emitting surface 52af. Accordingly, the amount of the light of the light emitting device 52a diffused vertically can be reduced as compared with the conventional structure. It is therefore possible to reduce the vertical width of the reflector 54b.

In addition, a light source image projected by a reflector becomes smaller as the distance between a light emitting device and the reflector increases. Accordingly, with the conventional structure in which a light emitting device is disposed in at a laterally center position with respect to a reflector, a light source image projected by each of opposite horizontal end portions of the reflector becomes smaller than a light source image projected by the horizontally central portion of the reflector. Thus, a diffused light distribution pattern formed by the conventional structure has a shape in which the vertical width of each of the opposite horizontal end portions is smaller than the vertical width of the horizontally central portion. Therefore, a laterally outer region near the vehicle cannot be irradiated with sufficient light. When the vertical width of the diffused light distribution pattern as a whole is increased, the horizontally outer area near the vehicle can be irradiated with light. On that occasion, however, the vertical width of the horizontally central portion becomes further larger. A vertically low area in the horizontally central portion is an area hidden by the body of the vehicle and located in the dead angle in view from the driver. Thus, an area uselessly irradiated with light increases.

In contrast, according to the lamp unit 50, the reflector 54b is designed so that light is reflected outward in the vehicle width direction by the one end portion 54b1 which is close to the light emitting device 52a, and reflected to the central side in the vehicle width direction by the other end portion 54b2 which is distant from the light emitting device 52a. Accordingly, the diffused light distribution pattern P formed by the lamp unit 50 has a shape in which the vertical width on the horizontally outer side is larger than the vertical width in the horizontally central portion, so that the horizontally outer area near the vehicle per se can be irradiated with sufficient light. Accordingly, the diffused light distribution pattern P in which the vertical width on the horizontally outer side is larger can be formed without increasing the vertical width in the horizontally central portion. In addition, the direction in which the light from the light emitting device 52a is reflected by the reflector 54b varies continuously from the outer side to the inner side in the vehicle width direction as the reflection position is shifted from the one end portion 54b1 to the other end portion 54b2. Accordingly, in the diffused light distribution pattern P, the vertical width increases continuously from the horizontally central portion to the horizontally outer side.

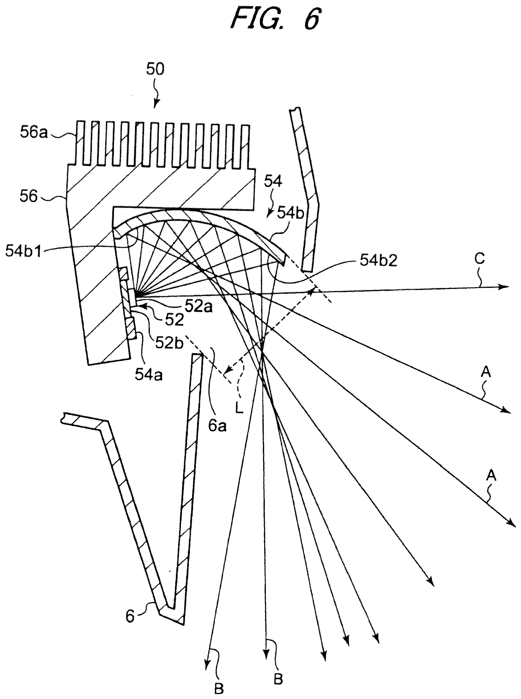

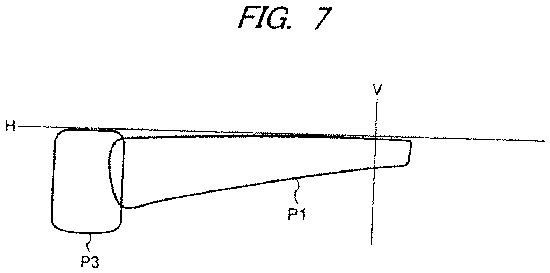

As shown in Figs. 6 and 7, the lamp unit 50 may be configured to form a diffused light distribution pattern and an additional light distribution pattern. Fig. 7 illustrates the light distribution patterns formed on a virtual vertical screen disposed in front of the lamp, e.g., at a position 10 m ahead of the lamp.

As shown in Fig. 6, the lamp unit 50 is configured so that light from the light emitting device 52a (light rays C in Fig. 6) can be radiated directly forward of the lamp. That is, the positional relation between the light emitting device 52a and the reflector 54b is determined so that a part of the light from the light emitting device 52a is not reflected by the reflector 54b but radiated to the outside of the vehicle lamp 1. An additional light distribution pattern P3 is formed by the light rays C radiated directly from the light emitting device 52a.

As shown in Fig. 7, the additional light distribution pattern P3 is formed more laterally outward in the vehicle width direction than the diffused light distribution pattern P1. The additional light distribution pattern P3 formed by the right headlamp has a shape bilaterally symmetrical to the additional light distribution pattern P3 formed by the left headlamp. The additional light distribution patterns P3 are formed in bilaterally symmetric positions. Since the additional light distribution patterns P3 are formed thus, driver's visual recognition in more outer areas in the vehicle width direction than the area irradiated with light in the diffused light distribution pattern P can be improved.

The meaning of "rectangular" is not limited to have a shape a rectangle, but also includes a shape resembling a rectangle to the extent that the object of the present invention can be achieved. Further, the phrase "in the vertical direction" does not necessarily mean that it is parallel to the vertical line V, and may be inclined with respect to the vertical line V, e.g., at an angle of ±15°, to the extent that the object of the present invention can be achieved. Further, "the long sides 52af1 of the light emitting surface 52af are projected to extend in the vertical direction of the diffused light distribution pattern P" does not necessarily mean that the long sides 52af1 are parallel to the vertical line V, and the long sides 52af1 may be inclined with respect to the vertical line V, e.g., at an angle of ±15°, to the extent that the object of the present invention can be achieved.

As described above, according to the lamp unit 50 of the vehicle lamp 1 that forms the laterally diffused light distribution pattern P, the light emitting device 52a having the rectangular light emitting surface 52af is disposed such that the long sides 52af1 of the light emitting surface 52af extend in the vertical direction. The reflector 54b reflects light from the light emitting device 52a such that the long sides 52af1 of the light emitting surface 52af are projected to extend in the vertical direction of the diffused light distribution pattern P, and such that, in the top view of the lamp unit 50, a part of the light reflected by the one end portion 54b1 of the reflector 54b and another part of the light reflected by the other end portion 54b2 of the reflector 54b intersect each other.

In this manner, the vertical direction in the diffused light distribution pattern P which is long horizontally and short vertically is associated with the long sides 52afl of the light emitting surface 52af, so that the amount of light of the light emitting device 52a diffused vertically can be reduced in comparison with that in the conventional structure in which long sides of a light emitting surface are associated with the horizontal direction of a diffused light distribution pattern. It is therefore possible to reduce the vertical width of the reflector 54b. As a result, the size of the lamp unit 50 can be reduced so that increase in the size of the vehicle lamp 1 due to addition of the lamp unit 50 for forming a diffused light distribution pattern can be suppressed.

In addition, because the part of the light reflected by the one end portion 54b1 and the other part of the light reflected by the other end portion 54b2 intersect each other, the size of the opening 6a of the extension member 6 that corresponds to the lamp unit 50 can be reduced as compared with a conventional structure. Thus, increase in the size of the vehicle lamp 1 due to addition of the lamp unit 50 for forming a diffused light distribution pattern can be suppressed. In addition, the lamp unit 50 for forming a diffused light distribution pattern can be disposed in a region in which the opening 6a cannot be formed largely. It is therefore possible to enhance the degree of freedom in the design of the vehicle lamp 1.

While the present invention has been described with reference to certain exemplary embodiments thereof, the scope of the present invention is not limited to the exemplary embodiments described above, and it will be understood by those skilled in the art that various changes and modifications may be made therein without departing from the scope of the present invention as defined by the appended claims.

For example, in the exemplary embodiments described above, the lamp unit 10 for forming the low-beam light distribution pattern and the lamp unit 30 for forming the high-beam light distribution pattern are provided in the vehicle lamp 1. However, the vehicle lamp 1 may include only one of the lamp units 10, 30, or may not include the lamp units 10, 30. Further, in place of the lamp units 10, 30, a lamp unit capable of forming both the low-beam light distribution pattern and the high-beam light distribution pattern may be provided in the vehicle lamp 1.

## Claims

1. A vehicle lamp (1) comprising:
a light emitting device (52a) having a rectangular light emitting surface (52af) ;
a reflector (54b) configured to reflect light from the light emitting device (52a) in a forward direction of the vehicle lamp (1) to form a horizontally diffused light distribution pattern (P1, P2), such that, in a top view of the vehicle lamp (1), a part (A) of the light reflected by one end portion (54b1) of the reflector (54b) and another part (B) of the light reflected by another end portion (54b2) of the reflector (54b) intersect each other,
**characterized in that** the light emitting device (52a) is disposed such that the long sides (52af1) of the light emitting surface (52af) extend in a vertical direction, and the reflector (54b) is configured to reflect the light from the light emitting device (52a) such that the long sides (52af1) of the light emitting surface (52af) are projected to extend in a vertical direction (V) of the horizontally diffused light distribution pattern (P1, P2).

2. The vehicle lamp (1) according to claim 1, wherein a distance from the light emitting device (52a) to the one end portion (54b1) of the reflector (54b) is shorter than a distance from the light emitting device (52a) to the other end portion (54b2) of the reflector (54b), and
the one end portion (54b1) of the reflector (54b) reflects the part (A) of the light toward an outer side in a vehicle width direction and the other end portion (54b2) of the reflector (54b) reflects the other part (B) of the light toward a central side in the vehicle width direction.

3. The vehicle lamp (1) according to claim 1 or 2, wherein the light emitting device (52a) and the reflector (54b) are arranged such that direct light (C) from the light emitting device (52a) forms another light distribution pattern (P3) that extends more laterally outward in the vehicle width direction than the horizontally diffused light distribution pattern (P1, P2).

4. The vehicle lamp (1) according to any one of the preceding claims, wherein the light emitting device (52a) is arranged such that the light emitting surface (52af) faces outward in the vehicle width direction.

5. The vehicle lamp (1) according to any one of the preceding claims, further comprising:
a lamp body (2) having a front opening;
a transparent cover (4) attached to the lamp body (2) to cover the front opening; and
an extension member (6) accommodated inside a lamp chamber (3) formed by the lamp body (2) and the transparent cover (4),
wherein the extension member (6) has an opening (6a) in a region where the part (A) of the light reflected by the one end portion (54b1) of the reflector (54b) and the other part (B) of the light reflected by the other end portion (54b2) of the reflector (54b) intersect each other.

6. The vehicle lamp (1) according to claim 5, further comprising a lamp unit (10) configured to form a low-beam light distribution pattern (Lo), wherein the horizontally diffused light distribution pattern (P1, P2) has a wider lateral diffusion angle than the low-beam light distribution pattern (Lo).

## Patentansprüche

1. Fahrzeuglampe (1), umfassend:
eine lichtemittierende Vorrichtung (52a) mit einer rechteckigen lichtemittierenden Fläche (52af),
einen Reflektor (54b), der dazu konfiguriert ist, Licht von der lichtemittierenden Vorrichtung (52a) in einer Vorwärtsrichtung der Fahrzeuglampe (1) zu reflektieren, um ein horizontal gestreutes Lichtverteilungsmuster (P1, P2) zu bilden, so dass, in einer Draufsicht der Fahrzeuglampe (1), ein Teil (A) des von einem Endabschnitt (54b1) des Reflektors (54b) reflektierten Lichts und ein anderer Teil (B) des von einem anderen Endabschnitt (54b2) des Reflektors (54b) reflektierten Lichts einander schneiden,
**dadurch gekennzeichnet, dass** die lichtemittierende Vorrichtung (52a) derart angeordnet ist, dass sich die langen Seiten (52af1) der lichtemittierenden Fläche (52af) in einer vertikalen Richtung erstrecken, und der Reflektor (54b) dazu konfiguriert ist, Licht von der lichtemittierenden Vorrichtung (52a) derart zu reflektieren, dass die langen Seiten (52af1) der lichtemittierenden Fläche (52af) projiziert werden, um sich in einer vertikalen Richtung (V) des horizontal gestreuten Lichtverteilungsmusters (P1, P2) zu erstrecken.

2. Fahrzeuglampe (1) nach Anspruch 1, wobei ein Abstand von der lichtemittierenden Vorrichtung (52a) zu dem einen Endabschnitt (54b1) des Reflektors (54b) kürzer ist als ein Abstand von der lichtemittierenden Vorrichtung (52a) zu dem anderen Endabschnitt (54b2) des Reflektors (54b), und
der eine Endabschnitt (54b1) des Reflektors (54b) den Teil (A) des Lichts zu einer Außenseite in einer Fahrzeugbreitenrichtung reflektiert und der andere Endabschnitt (54b2) des Reflektors (54b) den anderen Teil (B) des Lichts zu einer zentralen Seite in der Fahrzeugbreitenrichtung reflektiert.

3. Fahrzeuglampe (1) nach Anspruch 1 oder 2, wobei die lichtemittierende Vorrichtung (52a) und der Reflektor (54b) so angeordnet sind, dass direktes Licht (C) von der lichtemittierenden Vorrichtung (52a) ein anderes Lichtverteilungsmuster (P3) bildet, das sich in der Fahrzeugbreitenrichtung mehr seitlich nach außen erstreckt als das horizontal gestreute Lichtverteilungsmuster (P1, P2).

4. Fahrzeuglampe (1) nach einem der vorhergehenden Ansprüche, wobei die Lichtemissionsvorrichtung (52a) derart angeordnet ist, dass die lichtemittierende Fläche (52af) in der Fahrzeugbreitenrichtung nach außen weist.

5. Fahrzeuglampe (1) nach einem der vorhergehenden Ansprüche, ferner umfassend:
einen Lampenkörper (2) mit einer vorderen Öffnung,
eine transparente Abdeckung (4), die an dem Lampenkörper (2) angebracht ist, um die vordere Öffnung abzudecken, und
ein Verlängerungselement (6), das in einer Lampenkammer (3) untergebracht ist, die durch den Lampenkörper (2) und die transparente Abdeckung (4) gebildet ist,
wobei das Verlängerungselement (6) eine Öffnung (6a) in einem Bereich aufweist, in dem der Teil (A) des von dem einen Endabschnitt (54b1) des Reflektors (54b) reflektierten Lichts und der andere Teil (B) des von dem anderen Endabschnitt (54b2) des Reflektors (54b) reflektierten Lichts einander schneiden.

6. Fahrzeuglampe (1) nach Anspruch 5, ferner umfassend eine Lampeneinheit (10), die eingerichtet ist, um ein Abblendlicht-Lichtverteilungsmuster (Lo) zu bilden, wobei das horizontal gestreute Lichtverteilungsmuster (P1, P2) einen breiteren seitlichen Diffusionswinkel aufweist als das Abblendlichtverteilungsmuster (Lo).

## Revendications

1. Phare de véhicule (1) comprenant :
un dispositif d'émission de lumière (52a) ayant une surface d'émission de lumière rectangulaire (52af) ;
un réflecteur (54b) configuré pour refléter la lumière du dispositif d'émission de lumière (52a) dans une direction avant du phare de véhicule (1) afin de former un motif de distribution de lumière diffusé horizontalement (P1, P2), de sorte que, sur une vue de dessus du phare de véhicule (1), une partie (A) de la lumière reflétée par une partie d'extrémité (54b1) du réflecteur (54b) et une autre partie (B) de la lumière reflétée par une autre partie d'extrémité (54b2) du réflecteur (54b) se coupent,
**caractérisé en ce que** le dispositif d'émission de lumière (52a) est disposé de sorte que les côtés longs (52af1) de la surface d'émission de lumière (52af) s'étendent dans une direction verticale, et le réflecteur (54b) est configuré pour refléter la lumière du dispositif d'émission de lumière (52a) de sorte que les côtés longs (52af1) de la surface d'émission de lumière (52af) sont projetés pour s'étendre dans une direction verticale (V) du motif de distribution de lumière diffusé horizontalement (P1, P2).

2. Phare de véhicule (1) selon la revendication 1, dans lequel une distance allant du dispositif d'émission de lumière (52a) à ladite une partie d'extrémité (54b1) du réflecteur (54b) est plus courte qu'une distance allant du dispositif d'émission de lumière (52a) à l'autre partie d'extrémité (54b2) du réflecteur (54b), et
ladite une partie d'extrémité (54b1) du réflecteur (54b) reflète la partie (A) de la lumière vers un côté externe dans le sens de la largeur du véhicule et l'autre partie d'extrémité (54b2) du réflecteur (54b) reflète l'autre partie (B) de la lumière vers un côté central dans le sens de la largeur du véhicule.

3. Phare de véhicule (1) selon la revendication 1 ou 2, dans lequel le dispositif d'émission de lumière (52a) et le réflecteur (54b) sont agencés de sorte que la lumière directe (C) provenant du dispositif d'émission de lumière (52a) forme un autre motif de distribution de lumière (P3) qui s'étend latéralement plus vers l'extérieur dans le sens de la largeur du véhicule que le motif de distribution de lumière diffusé horizontalement (P1, P2).

4. Phare de véhicule (1) selon l'une quelconque des revendications précédentes, dans lequel le dispositif d'émission de lumière (52a) est agencé de sorte que la surface d'émission de lumière (52af) est orientée vers l'extérieur dans le sens de la largeur du véhicule.

5. Phare de véhicule (1) selon l'une quelconque des revendications précédentes, comprenant en outre :
un corps de phare (2) ayant une ouverture avant ;
un couvercle transparent (4) fixé sur le corps de phare (2) pour recouvrir l'ouverture avant ; et
un élément d'extension (6) logé à l'intérieur d'une chambre de phare (3) formée par le corps de phare (2) et le couvercle transparent (4),
dans lequel l'élément d'extension (6) a une ouverture (6a) dans une région dans laquelle la partie (A) de la lumière reflétée par la une partie d'extrémité (54b1) du réflecteur (54b) et l'autre partie (B) de la lumière reflétée par l'autre partie d'extrémité (54b2) du réflecteur (54b) se coupent.

6. Phare de véhicule (1) selon la revendication 5, comprenant en outre une unité de phare (10) configurée pour former un motif de distribution de lumière de feu de croisement (Lo), dans lequel le motif de distribution de lumière diffusé horizontalement (P1, P2) a un angle de diffusion latéral plus large que le motif de distribution de lumière de feu de croisement (Lo).
